# EUROPEAN PATENT SPECIFICATION

(11) **EP 0 847 339 B1**
(45) Date of publication and mention of the grant of the patent: **15.11.2000**
(21) Application number: 96929585.6
(22) Date of filing: 29.08.1996
(51) Int. Cl.: B60M 1/02, H01R 11/30

(54) **CONTACT HEAD FOR MAKING MULTIPLE ELECTRICAL CONTACT WITH A CONDUCTING ARTICLE, AND MEANS PROVIDED WITH SUCH A CONTACT HEAD**
KONTAKTKOPF ZUR HERSTELLUNG EINES ELEKTRISCHES MEHRFACHKONTAKTES AN EINEM LEITFÄHIGEN GEGENSTAND, SOWIE EIN MIT EIN SOLCHE KONTAKTKOPF VERSEHENES MITTEL
TETE DE CONTACT POUR FORMER UN CONTACT ELECTRIQUE MULTIPLE AVEC UN ARTICLE CONDUCTEUR, ET MOYEN DOTE DE LADITE TETE DE CONTACT

(30) Priority: 01.09.1995 NL 1001121
(43) Date of publication of application: 17.06.1998
(73) Proprietor: Railpro B.V., 1200 AW Hilversum (NL)
(72) Inventor: TIECKEN, Jacques, NL-4191 ZS Geldermalsen (NL)
(74) Representative: de Bruijn, Leendert C.
(86) International application number: NL9600342
(87) International publication number: WO9709193

(56) References cited:
- DE-C- 405 128
- FR-A- 2 506 235

## Description

A method and device for making a shunt between, for example, two rails of a railway track are proposed in Netherlands Patent Application 1 000 713 in the name of the present Applicant, which has not previously been published. Two electrical contact points are arranged on each of the two rails. One of the two contact points on each rail is connected via a shunt to a corresponding contact point on the other rail. The two remaining contact points are connected to an ohmmeter. If all four contact points make good electrical contact with the respective rails, the ohmmeter will measure a shunt. The shunt produced can be monitored in the sense that an alarm signal is given as soon as the shunt is broken for any reason whatsoever. In practice, shunts of this type are deliberately applied between two rails of a track in the rail network if said track must not be used by trains. Specifically, making a shunt between the rails causes the signal associated with that track to change to red. Optionally, a facility can be provided for a shunt of this type automatically to apply the brakes of a train which drives onto the track without authority (automatic fail-safe feature for trains).

However, means which enable such a four-point shunting method to be realised in an adequate manner are not described in more detail in the said patent application.

Previously it was customary to produce a shunt between two rails of a track using a shunt bar, which was originally developed by Pouyet. Said shunt bar is made up of two bars, which lie in the extension of one another, and a handle. The distance between the ends of the two bars is sufficiently large that the shunt bar can be placed precisely perpendicularly between two rails of the rail network. On operation of the handle, the two bars are pushed away from one another, such that the pointed ends thereof are pressed against the rails. Providing the ends with a sharp point makes it possible for them to be pressed through rust and dirt onto the rails if the force exerted is sufficiently high. If electrical contact with the rails is not produced, the bars can be turned with the aid of the handle so that the points thereof penetrate through the rust and dirt. However, with this shunt bar only one electrical contact can be produced on each rail, with the result that said shunt bar is suitable only for making a shunt between two rails of a track, but not for connection to the above-mentioned ohmmeter. In order to check whether a shunt had actually been produced using a shunt bar of this type it was customary for an operator to have to walk to the start of the track concerned to see whether the signal had actually changed to red. Once it had been established that the light had changed to red, this was not subsequently checked because of the associated inconvenience of walking backwards and forwards. As a shunt bar of this type can vibrate loose for diverse reasons, safety of, for example, railway workers on the track is not guaranteed. The aim of the abovementioned four-point method is to provide a solution to this problem, but said method stands or falls with the availability of means with which four electrical contact points with two rails can be produced reliably and simply. The aim of the present invention is to provide such means.

The Applicant is aware that means have already been designed for the same purpose. Said known means, from which the claims make a distinction, comprise a foldable shunt bar which has two bars foldable with respect to one another. Said foldable shunt bar has two instead of one pointed contact points at both ends of each of the bars. One of the two contact points is in electrical contact with the bar itself and is intended for shunting with a corresponding contact point at the end of the other bar, which is electrically short-circuited with the first mentioned bar. The two remaining contact points can be connected via suitable cables to the ohmmeter. On operation of the shunt bar, two pointed contact points at both ends must be pushed through rust and dirt on the rails in order to guarantee a good electrical contact. It is found that a force calculated to be equivalent to about 360 kg is needed for this purpose. In contrast to the original Pouyet bar, it is not possible with said last-mentioned shunt bar to improve the intended electrical contact by turning the bar as a whole. During use, two sharp points, each outside the centre line of the bars of the shunt bar, on the two ends of the shunt bar are pushed so forcefully against the rails that any turning to scrape away rust and dirt results in mechanical dislocation or breakage of the shunt bar. Therefore, with this device, if good electrical contact has not been produced, the electrical contact can be improved only by removing the shunt bar as a whole and refitting it, possibly in a different location.

The aim of the present invention is to provide improved means for multiple electrical contact with electrically conducting articles, for example rails of a railway track, which means can advantageously be used in the said four-point method.

The invention therefore provides a contact head as claimed in claim 1. Using a contact head of this type, a multiple electrical contact with an electrically conducting article can be produced, it being possible to improve the contact, if necessary, by turning the contact head, which is possible because at least the second contact has a circular contact edge which is able to rotate around the centre of the circular shape. Using a prototype it has been found that electrical contact with severely rusted and dirty rails could be produced with a resistance value of less than 15 mΩ by applying a force of about and in the region of 70 kg.

The first contact can be provided with a sharp point which is located in the centre of the said first circle. In an embodiment of this type, the second contact can be turned simply about the first contact, whilst at the same time, as a result of turning the first contact, the sharp point thereof will penetrate better through rust and dirt.

Alternatively, the first contact can, however, be provided with a contact edge which has the shape of at least a part of a second circle with a second radius, which second circle is concentric with the first circle. In this case, the second radius may equal the first radius.

Both the first and the second contact can be covered with synthetic diamond, which is hard but nevertheless electrically conducting.

Preferably, the second contact is resiliently supported with respect to the first contact, with the aid of resilient means.

The invention also relates to electrical contact means according to claim 8. Further embodiments thereof are claimed in dependent claims 9 and 10.

The invention also relates to the use of at least one diamond drill head for the production of a contact head according to the invention. This is highly advantageous because it is then not necessary to design separate contacts, for example for the said second contact, but is possible to use standard components for this purpose.

Finally, the invention relates to a method for the production of electrical contact means, as claimed in claim 12.

Using a method of this type existing Pouyet-type shunt bars can easily be modified to shunt bars according to the invention, which are suitable for the four-point shunt method.

The invention will be explained in more detail below with reference to a few figures, which show examples of the invention but which are not intended to imply any restriction with respect to the scope of the invention.
Figure 1 shows a diagrammatic view of a first set-up according to the invention, in which use is made of a modified shunt bar;
Figure 2 shows a diagrammatic front view of a contact head of a shunt bar as shown in Figure 1;
Figure 3 shows a diagrammatic cross-section through a contact head of a shunt bar according to Figure 1;
Figure 4 shows a diagrammatic contact head which can be pressed with the aid of magnetic means onto, for example, a rail;
Figure 5 shows a front view of a contact head according to Figure 4.

In the figures the same reference numerals always relate to the same components.

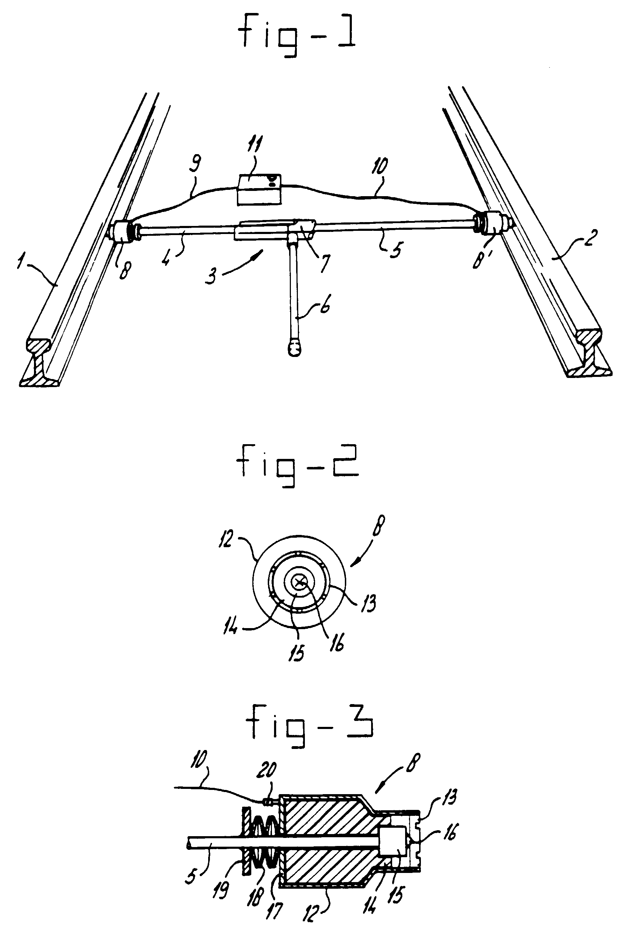

Figure 1 shows two parallel rails 1 and 2 within a specific track of the railway network. In this context it is pointed out that the invention is explained with reference to an application for railways, but it will be clear that it can also be applied to other conducting articles with which two (or multiple) contacts have to be produced, which are made more difficult by, for example, rust and dirt.

The two rails 1, 2 are customarily a predetermined distance apart and are, for example, fixed on sleepers, which are not shown. If desired, a shunt between the two rails 1, 2 is produced using a shunt bar 3. The shunt bar 3 shown comprises two bars 4, 5, lying in the extension of one another, and a handle 6. The handle 6 and the bars 4, 5 are mechanically connected to one another at a connection point 7, which is equipped such that the bars 4 and 5 are moved towards one another if the handle 6 is brought parallel to the bars 4 and 5. Conversely, the bars 4 and 5 move apart if the handle is brought into the position perpendicular to the bars 4 and 5. In the first-mentioned situation, the shunt bar 3 fits precisely between the rails 1 and 2 in a direction perpendicular thereto. In the second situation, contact heads 8, 8', which are located at the ends of the bars 4 and 5, are pushed with a predetermined force against the sides of the rails 1 and 2 in order thus to make electrical contact. Each of the contact heads 8, 8' is equipped to make two electrical contacts with the respective rail 1, 2. One of the two contacts in the contact heads 8, 8' is connected to the associated bar 4, 5, whilst the other contact is connected to a cable 9, 10 which leads to an ohmmeter 11.

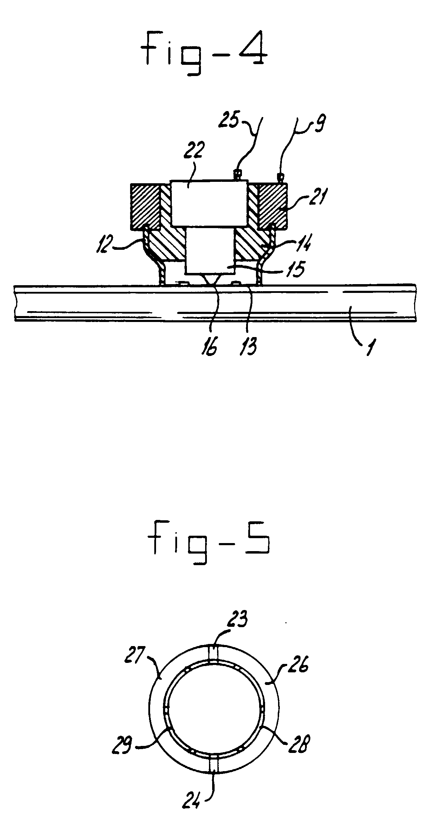

Figure 2 shows a front view of a first embodiment of a contact head 8 with which the desired two electrical contacts can be produced, whilst Figure 3 shows a cross-section thereof.

The contact head 8 comprises a first contact 15, which is located on the centre line of the bar 5 and is provided with a sharp point 16 projecting outwards. The contact 15 is made of electrically conducting material and is electrically connected to the bar 5. The contact 15 can, for example, have been made integral with bar 5.

A second contact 12 is arranged coaxially around the first contact 15. The second contact 12 is likewise made of electrically conducting material. The contact 12 is provided with an electrically conducting contact edge 13 which covers at least part of the circular outer edge of contact 12. The contact edge 13 is made of hard, conducting material, for example synthetic diamond. The contact point 16 can also be made of, or be covered by, this material. The contact 12, including contact edge 13, can advantageously have a structure such as is already employed as a diamond drill head. Shunt bars for the two-point method which are known from the prior art can be modified with the aid of such known diamond drill heads to provide a contact head according to the invention.

Insulating material 14 is present between, on one side, the bar 5 and the contact 15 connected thereto and, on the other side, the contact 12.

The contact 12 is, for example, provided with a terminal 20 for connection to the cable 10, which leads to the ohmmeter 11 (Figure 1)

There is a fixed stop 19 on the bar 5. Resilient means 18, for example a cupped spring washer, are preferably arranged between the stop 19 and the contact 12, so that the two contacts 15 and 12 can be moved somewhat with respect to one another in the direction of the centre line, which makes the two electrical contacts simpler and more reliable.

During operation, the force with which contact point 16 can be pressed against rail 2 is determined by the resilient force of the connection point 7, as is known to a person skilled in the art. The force with which the contact edge 13 of the contact 12 is pressed against the rail 2 also depends on the resilient means 18, if employed. Because contact point 16 is located on the centre line of the bar 5 and contact edge 13 is located coaxially around contact point 16, the entire contact head 8 can be turned without too much force about the centre line when the contact head 8 has already been pressed against the rail 2. By this means rust and dirt at the contact locations are removed and two electrical contacts are ensured. With a prototype it has been found that even with very severely contaminated and rusted rails two electrical contacts could be achieved with a contact force of about 70 kg. In order to achieve this it was necessary to turn the complete shunt bar 3 according to the invention only once through about a quarter turn, after said shunt bar had been clamped between two rails 1, 2 by bringing the handle 6 into the contact pressure position.

Figure 5 shows an alternative embodiment of a contact head according to the invention. The contact head shown in this figure is a modification of already existing contact heads for making a shunt between, for example, two rails. An existing contact head of this type (not shown) consists of a strongly magnetic, conducting material which is connected by a cable to another identical contact head. An existing contact head of this type is intended to be fitted on the top of regularly used rails. There is hardly any corrosion on the top of regularly used rails and electrical contact with a rail can therefore be produced without too much difficulty using a magnetic contact head of this type. The cable is long enough to bridge the gap between two adjacent rails. Devices of this type provided with two such contact heads, connected by a cable, are carried by virtually all trains in the driver's cab. In practice, however, it is found that making a reliable electrical contact nevertheless leaves something to be desired, as a result of which these devices are not used everywhere where they would be needed.

Figure 4 shows a cross-section of a contact head with which contact with a rail can be obtained in a more reliable manner and which is suitable for use in the abovementioned four-point contact method. The contact head shown comprises a first contact 15, located on the centre line of the contact head. Once again, a sharp point 16 can have been made on the contact 15. However, since this contact head is intended to make contact with a virtually non-corroded top section of a rail, the sharp point 16 can also be omitted.

A second contact 12, which is preferably provided with a hard, sharp contact edge 13, is located coaxially around the centre line. A first magnet 22 is arranged in contact with the first contact 15, whilst a second, concentric magnet 21 is arranged in contact with the second contact 12. The first and second magnets 22, 21 and the first and second contacts 15, 12 are separated from one another by a suitable electric insulation 14.

A cable 25 is attached to the first magnet 22, and leads to a corresponding magnet of another identical contact head, which must be attached to the other rail. Cable 9 is attached to the second magnet 21 and leads to ohmmeter 11 (Figure 1). Of course, the function of the cables 9, 25 can be reversed.

Because magnets 21, 22 are strongly magnetic and because they have a predetermined weight, the contacts 12 and 15 are pressed against the rail 1. If the electrical contact of one of the two with rail 1 is unsatisfactory, rotating the entire contact head about its centre line can produce the desired contact because this rotation has the effect of scraping away rust and dirt.

If desired, the contact 12 can, just as in the embodiment according to the previous figures, be supported resiliently with respect to contact 15, for example by means of a cupped spring washer (not shown).

Figure 5 shows a front view of an alternative embodiment of a contact head according to the invention. Compared with Figure 2, the centrally located contact 15 has been removed. In place of this, the outermost contact, which in the previous figures was designated by 12, has been split into two contacts 26, 27, one of which is electrically connected to a similar contact of another contact head and the other of which is connected to ohmmeter 11. Contacts 26, 27 have a contact edge 28, 29, which is made of hard, conducting material. They can, for example, be covered by electrically conducting, synthetic diamond. The contacts are electrically insulated from one another by means of insulation 23, 24.

The contact edges 28, 29 can be pressed by suitable pressure means against a rail, after which good electrical contact is ensured by some rotation about the centre line. The pressure means can consist of bars 4, 5 and lever 6 of a shunt bar 3, as shown in Figure 1. Alternatively, however, they can also consist of magnets in a manner similar to that shown in Figure 4 (although the shape of the magnets must, of course, be adapted to the shape of contacts 26, 27).

The invention is not restricted to the embodiments shown. A further alternative is, for example, that in the embodiment according to Figures 2, 3 and 4 not all, but only part, of the contact edge 13 is electrically conducting and possibly even that only a point section thereof is electrically conducting. Similarly, the centrally located contact 15 in said embodiment can be replaced by a circular contact which is supported concentrically with contact 12 and, just like contact 12, is provided with a sharp, hard, at least partly conducting edge. A contact 15 of this type could, for example, also be made from a diamond drill head, although of a smaller diameter than contact 12.

In the embodiment according to Figure 5, the conducting contact edges 28, 29 do not have to cover almost a semicircular arc. The distance covered can also be a smaller part of an arc of a circle. Equally, the two contact edges 28, 29 do not have to lie on parts of the same circle: one of the two can lie on an arc of a circle with a smaller radius than the other. The essential feature is only that the two contacts 12, 15 and 26, 27, respectively, are formed in such a way that they can be turned together without too great a force around the centre line of the contact head in order thus to remove rust and dirt from, for example, a rail.

Finally, it is also pointed out that the contact head has been described above in an embodiment which is suitable for making two electrical contacts. The basic concept of the invention can, however, also be extended to contact heads which are equipped for multiple contacts in general. For example, three or more concentric contacts can be arranged in the contact head.

## Claims

1. Contact head for making multiple electrical contact with an electrically conducting article, which contact head is provided with at least a first contact (15; 26) and a distinct second contact (12; 27), which contacts are electrically separated from one another, characterised in that at least the second contact (12; 27) is provided with a contact edge (13; 29) which has the shape of at least a part of a first circle with a first radius.

2. Contact head according to Claim 1, characterised in that the first contact (15) is provided with a sharp point (16), which is located in the centre of the said first circle.

3. Contact head according to Claim 1, characterised in that the first contact (26) is provided with a contact edge (28), which has the shape of at least a part of a second circle with a second radius, which second circle is concentric with the first circle.

4. Contact head according to Claim 3, characterised in that the second radius equals the first radius.

5. Contact head according to one of the preceding claims, characterised in that the first contact (15; 26) is covered with synthetic diamond.

6. Contact head according to one of the preceding claims, characterised in that the second contact (12; 27) is covered with synthetic diamond.

7. Contact head according to one of the preceding claims, characterised in that the second contact (12) is resiliently supported with respect to the first contact (15), with the aid of resilient means (18).

8. Means for making a multiple electrical contact with an electrically conducting article, which means are provided with at least one contact head according to one of the preceding claims and with pressure means (4, 5, 6; 21, 22) for exerting a pressing force on the at least one contact head in the direction of the article.

9. Means according to Claim 8, characterised in that the pressure means comprise a shunt bar (3), provided with a first bar (4) having a first contact head (8), a second bar (5) which is in line with the first bar (4) and has a second contact head (8'), and a handle (6) for moving the first bar (4) and the second bar (5) away from one another.

10. Means according to Claim 8, characterised in that the pressure means comprise a first magnet (22) and a second magnet (21), which first magnet (22) is in magnetic contact with the first contact (15) and which second magnet (21) is in magnetic contact with the second contact (12) and is electrically separated from the first magnet.

11. Use of at least one diamond drill head for the production of a contact head according to one of Claims 1 to 7.

12. Method for the production of means according to Claim 9, comprising the following steps:
a. provision of the said shunt bar (3), the end of the first bar (4) being provided with a first contact (15) located on the centre line of the first bar (4) and the end of the second bar (5) being provided with a third contact located on the centre line of the second bar (5), which third contact is in electrical contact with the first contact (15);
b. the production of the second contact (12) with the aid of a first diamond drill head concentrically around the first contact (15);
c. the production of a fourth contact (12) with the aid of a second diamond drill head concentrically around the third contact (15).

## Patentansprüche

1. Kontaktkopf zum Herstellen von mehreren elektrischen Kontakten mit einem elektrisch leitenden Gegenstand, welcher Kontaktkopf mit wenigstens einem ersten Kontakt (15; 26) und einem von diesem verschiedenen zweiten Kontakt (12; 27) versehen ist, welche Kontakte elektrisch voneinander getrennt sind, **dadurch gekennzeichnet**, daß zumindest der zweite Kontakt (12; 27) mit einem Kontaktrand (13; 29) versehen ist, welcher die Form von zumindest einem Teil eines ersten Kreises mit einem ersten Radius aufweist.

2. Kontaktkopf nach Anspruch 1, **dadurch gekennzeichnet**, daß der erste Kontakt (15) mit einer scharfen Spitze (16) versehen ist, welche in der Mitte des ersten Kreises angeordnet ist.

3. Kontaktkopf nach Anspruch 1, **dadurch gekennzeichnet**, daß der erste Kontakt (26) mit einem Kontaktrand (28) versehen ist, welcher die Form zumindest eines Teils eines zweiten Kreises mit einem zweiten Radius aufweist, welcher zweite Kreis konzentrisch zu dem ersten Kreis ist.

4. Kontaktkopf nach Anspruch 3, **dadurch gekennzeichnet**, daß der zweite Radius gleich dem ersten Radius ist.

5. Kontaktkopf nach einem der vorangehenden Ansprüche, **dadurch gekennzeichnet**, daß der erste Kontakt (15; 26) mit synthetischem Diamant beschichtet ist.

6. Kontaktkopf nach einem der vorangehenden Ansprüche, **dadurch gekennzeichnet**, daß der zweite Kontakt (12; 27) mit synthetischem Diamant beschichtet ist.

7. Kontaktkopf nach einem der vorangehenden Ansprüche, **dadurch gekennzeichnet**, daß der zweite Kontakt (12) federnd bezüglich des ersten Kontakts (15) mit Hilfe von Federmitteln (18) gelagert ist.

8. Mittel zum Herstellen von mehreren elektrischen Kontakten mit einem elektrisch leitenden Gegenstand, welche Mittel mit wenigstens einem Kontaktkopf gemäß einem der vorangehenden Ansprüche versehen sind und mit Druckmitteln (4, 5, 6; 21, 22) zum Ausüben einer Druckkraft auf den wenigstens einen Kontaktkopf in Richtung des Gegenstands.

9. Mittel nach Anspruch 8, **dadurch gekennzeichnet**, daß die Druckmittel eine Nebenschlußstange (3) umfassen, welche mit einer ersten Stange (4) mit einem ersten Kontaktkopf (8), mit einer zweiten Stange (5), welche auf einer Linie mit der ersten Stange (4) liegt und einen zweiten Kontaktkopf (8') aufweist, und mit einem Griff (6) zum Bewegen der ersten Stange (4) und der zweiten Stange (5) voneinander weg versehen ist.

10. Mittel nach Anspruch 8, **dadurch gekennzeichnet**, daß die Druckmittel einen ersten Magneten (22) und einen zweiten Magneten (21) umfassen, welcher erste Magnet (22) in magnetischem Kontakt mit dem ersten Kontakt (15) steht und welcher zweite Magnet (21) in magnetischem Kontakt mit dem zweiten Kontakt (12) steht und elektrisch von dem ersten Magneten getrennt ist.

11. Verwendung von wenigstens einem Diamantbohrkopf zur Herstellung eines Kontaktkopfes gemäß einem der Ansprüche 1 bis 7.

12. Verfahren zur Herstellung von Mitteln nach Anspruch 9, umfassend die folgenden Schritte:
a. Vorsehen der Nebenschlußstange (3), wobei das Ende der ersten Stange (4) mit einem auf der Mittellinie der ersten Stange (4) liegenden ersten Kontakt (15) versehen ist und wobei das Ende der zweiten Stange (5) mit einem auf der Mittellinie der zweiten Stange (5) liegenden dritten Kontakt versehen ist, welcher dritte Kontakt in elektrischer Verbindung mit dem ersten Kontakt (15) steht;
b. Herstellung des zweiten Kontakts (12) mit Hilfe eines ersten Diamantbohrkopfes konzentrisch um den ersten Kontakt (15) herum;
c. Herstellung eines vierten Kontakts (12) mit Hilfe eines zweiten Diamantbohrkopfes konzentrisch um den dritten Kontakt (15) herum.

## Revendications

1. Tête de contact pour établir un contact électrique multiple avec un article conducteur de l'électricité, ladite tête de contact étant pourvue d'au moins un premier contact (15 ; 26) et d'un deuxième contact distinct (12 ; 27), lesdits contacts étant électriquement séparés l'un de l'autre, caractérisée en ce que ledit deuxième contact au moins (12 ; 27) est pourvu d'un bord de contact (13 ; 29) qui a la forme d'au moins une première partie d'un premier cercle avec un premier rayon.

2. Tête de contact selon la revendication 1, caractérisée en ce que le premier contact (15) est pourvu d'une pointe acérée (16), située au centre dudit premier cercle.

3. Tête de contact selon la revendication 1, caractérisée en ce que le premier contact (26) est pourvu d'un bord de contact (28), lequel a la forme d'au moins une partie d'un deuxième cercle avec un deuxième rayon, ledit deuxième cercle étant concentrique avec le premier cercle.

4. Tête de contact selon la revendication 3, caractérisée en ce que le deuxième rayon est égal au premier rayon.

5. Tête de contact selon l'une des revendications précédentes, caractérisée en ce que le premier contact (15 ; 26) est recouvert de diamant synthétique.

6. Tête de contact selon l'une des revendications précédentes, caractérisée en ce que le deuxième contact (12 ; 27) est recouvert de diamant synthétique.

7. Tête de contact selon l'une des revendications précédentes, caractérisée en ce que le deuxième contact (12) est supporté élastiquement par rapport au premier contact (15), avec l'aide de moyens élastiques (18).

8. Organes pour établir un contact électrique multiple avec un article conducteur de l'électricité, lesdits organes étant pourvus d'au moins une tête de contact selon l'une des revendications précédentes, et de moyens de pression (4, 5, 6 ; 21, 22) pour exercer une force de pression sur ladite au moins une tête de contact dans la direction de l'article.

9. Organes selon la revendication 8, caractérisés en ce que les moyens de pression comprennent une barre de shunt (3), pourvue d'une première barre (4) ayant une première tête de contact (8), d'une deuxième barre (5) qui se trouve en ligne avec la première barre (4) et possède une deuxième tête de contact (8'), et d'une poignée (6) pour déplacer la première barre (4) et la deuxième barre (5) en éloignement l'une de l'autre.

10. Organes selon la revendication 8, caractérisés en ce que les moyens de pression comprennent un premier aimant (22) et un deuxième aimant (21), ledit premier aimant (22) étant en contact magnétique avec le premier contact (15), et ledit deuxième aimant (21) étant en contact magnétique avec le deuxième contact (12), et étant électriquement séparé du premier aimant.

11. Utilisation d'au moins une tête de perçage au diamant pour la production d'une tête de contact selon l'une des revendications 1 à 7.

12. Procédé pour la production d'organes selon la revendication 9, comprenant les étapes suivantes :
a. fourniture de ladite barre de shunt (3), l'extrémité de ladite première barre (4) étant pourvue d'un premier contact (15) située sur la ligne centrale de la première barre (4) et l'extrémité de la deuxième barre (5) étant pourvue d'un troisième contact situé sur la ligne centrale de la deuxième barre (5), ledit troisième contact étant en contact électrique avec le premier contact (15) ;
b. production du deuxième contact (12) avec l'aide d'une première tête de perçage au diamant, concentriquement autour du premier contact (15) ; et
c. production d'un quatrième contact (12) avec l'aide d'une deuxième tête de perçage au diamant, concentriquement autour du troisième contact (15).
